# EUROPEAN PATENT APPLICATION

(11) **EP 2 034 681 A1**
(43) Date of publication of application: **11.03.2009**
(21) Application number: 07721730.5
(22) Date of filing: 13.06.2007
(51) Int. Cl.: H04L 12/64

(54) **A METHOD AND SYSTEM FOR TRANSMITTING SUBSCRIBER TERMINATE LOCATION INFORMATION IN IP MULTIMEDIA SUBSYSTEM**

(30) Priority: 15.06.2006 CN 200610087154
(71) Applicant: Huawei Technologies Co., Ltd., Shenzhen, Guangdong Province 518129 (CN)
(72) Inventor: ZHU, Dongming, Shenzhen, Guangdong 518129 (CN); ZHANG, Zhaohui, Shenzhen, Guangdong 518129 (CN); XU, Jie, Shenzhen, Guangdong 518129 (CN)
(74) Representative: Gulde, Klaus W.
(86) International application number: PCT/CN2007/070109
(87) International publication number: WO 2007/147357

(57) **Abstract**

A method and an apparatus for transmitting location information of UE in IMS are disclosed here. The method includes: setting a location information obtaining module in an IMS domain for obtaining location information of a UE, wherein the location information obtaining module adds the location information of the UE into a SIP signal to transmit to the IMS domain. The apparatus includes a location information obtaining module, configured to receive location information of a UE, add the location information of the UE into SIP signaling, and transmit a signal to an IMS network via a SIP signal interface module of the apparatus.

## Description

The present application claims the priority of Chinese Patent Application No. 200610087154.4, filed on June 15, 2006, entitled "Method and Apparatus for Delivering Location Information of UE in IMS", which is incorporated herein by reference in its entirety.

### Field of the Invention

The present invention relates to the field of the IP Multimedia Subsystem, IMS, and more particularly, to a method and an apparatus for transmitting location information of UE in IMS.

### Background of the Invention

During the evolution from the second generation, 2G, to the third generation, 3G, wireless communication network, the 2G network and the 3G network will coexist in a long time. Interoperability of the two networks becomes an issue accordingly.

Registration information of a User Equipment, UE, should be obtained by the two networks when the UE registers both the 2G and the 3G networks, so an appropriate network can be selected to continue the call when the call needs to connect to users. Furthermore, the networks need to anchor all calls of the UE to facilitate auxiliary control when a user switches between the two networks.

To solve the above-mentioned problem, 3GPP and 3GPP2 standard organizations propose a scheme of call anchoring control based on IMS functional entities, for detecting respectively registration status and session status of a user in two networks, and implementing routing control and switching control according to the registration status and the session status.

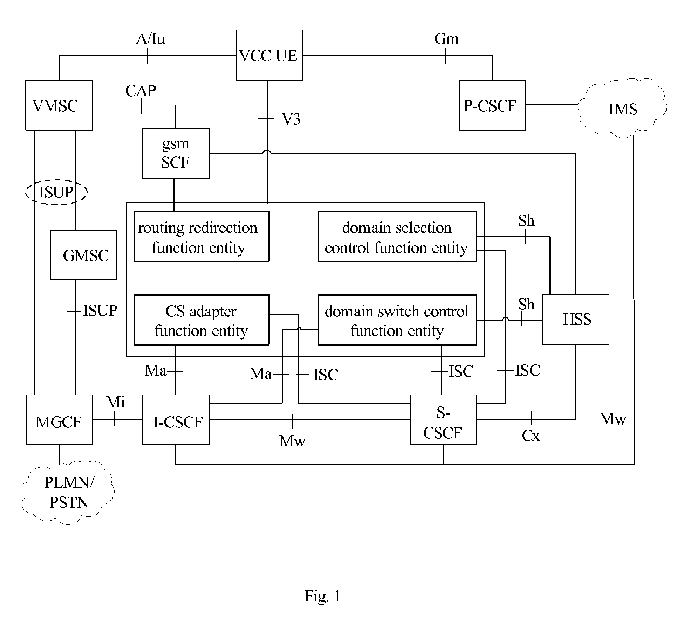

Fig. 1 is a schematic diagram showing the structure of components for implementing call anchoring control based on the IMS functional entities in the prior art. Referring to Fig 1, a group of functional entities as described below are added into an IMS domain and a CS domain.

A routing redirection functional entity (FE-C) is configured to redirect a CS call to the IMS domain to implement the call anchoring control.

A CS adapter functional entity (FE-B) is configured to receive the CS call redirected to the IMS domain and change the CS call into an IMS call. In general, the routing redirection functional entity and the CS adapter functional entity may be set in one entity, referred to as a redirection/adapter functional entity herein, and the two entities may be connected by an internal interface. The routing redirection functional entity and the CS adapter functional entity may also be independent of each other.

A domain selection control functional entity (FE-D) is configured to perform a determination according to policies information, e.g. the registration status and the calling status, and control the call to be routed to a selected domain which is used to continue the call.

A domain switch control functional entity (FE-A) is configured to perform a switching control when anchoring calls in the IMS domain and during switching.

A Visited Mobile Switch Center, VMSC, communicates with the FE-C via a gsmSCF. In general, the gsmSCF and the FE-C may be set in one entity. So it may be deemed that the VMSC directly communicates with the FE-C.

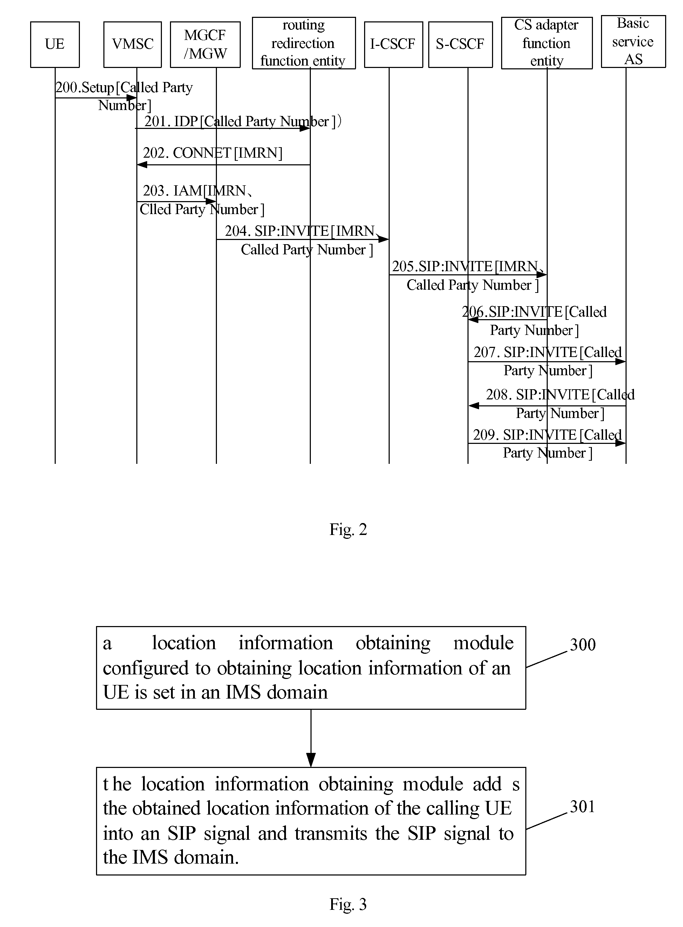

Fig.2 shows a flowchart of initiating a call in a CS domain by a dual-mode UE, based on the structure shown in Fig.1. As shown in Fig. 2, the procedure includes the following steps.

Step 200: A dual-mode UE sends via a CS domain a Setup message to a VMSC.

The Setup message carries a Called Party Number and a Cell ID corresponding to a cell which a calling UE is located in.

Step 201: The VMSC triggers an Initial Detect Point, IDP, message, and sends the IDP message to a routing redirection functional entity (FE-C), after receiving the Setup message.

In CDMA networks, the IDP message is an Origination Request, ORREQ, message. The IDP message and QRREQ message may be called an Intelligent Trigger message herein.

According to the Customized Applications for Mobile network Enhanced Logic, CAMEL, protocol, the IDP message should carry the Called Party Number and the Cell ID corresponding to the cell which the calling UE is located in. However the Cell ID is not used in the prior art, so the Cell ID is not shown in Fig. 2.

Step 202: The routing redirection functional entity allocates an IMS domain Routing Number, IMRN, and returns a CONNECT message carrying the allocated IMRN to the VMSC. So that the call is redirected to an IMS domain.

Step 203: The VMSC sends an initial address message, LAM, carrying the received IMRN and Called Party Number, to a Media Gate Control Function, MGCF, entity of the IMS domain.

In this step, the call is routed by the VMSC to an entrance gateway of the IMS domain.

Step 204: The MGCF entity constructs a SIP INVITE message carrying the received IMRN and Called Party Number, and sends the SIP INVITE message to an entrance Interrogating-Call Session Control Function, I-CSCF, of the IMS domain to which a called UE belongs.

The IMRN carried in the INVITE message is taken as a called address.

Step 205: After receiving the INVITE message, the I-CSCF detects that the called address is the IMRN, takes the IMRN as a Public Service Identity, PSI, and routes the INVITE message to a CS adapter functional entity (FE-B).

Step 206: The CS adapter functional entity substitutes the dual-mode UE to send the received INVITE message to a Serving-Call Session Control Function, S-CSCF, entity of the IMS domain. Further, the CS adapter functional entity substitutes the dual-mode UE to initiate a call session in the IMS domain.

Step 207: The S-CSCF triggers the call to a basic service Application Sever, AS, to which the UE belongs, and sends the received INVITE message to the basic service AS for performing the calling service control.

Step 208: The basic service AS returns the INVITES message to the S-CSCF after accomplishing the calling service control.

Step 209: The S-CSCF routes the session to the network at the called UE side, and the call continues.

If the dual-mode UE subscribes original calls barring service, such as barring of all outgoing calls, barring of outgoing international calls, barring of national toll, etc. These barring services are controlled by the basic service AS. So the basic service AS should have ability to identify whether the type of current call satisfies the conditions for barring services, so as to perform corresponding service control.

Taking the process that the basic service AS determines whether a call of the dual-mode UE is a long-distance call as an example, the basic service AS needs to obtain location information of the dual-mode UE initiating the call and home location information of the called UE. If the location of the dual-mode UE and the location of the called UE belong to a same district, the basic service AS determines that the call is not a long-distance call. If the location of the dual-mode UE and the location of the called UE do not belong to a same district, the basic service AS determines that the call is a long-distance call. Moreover, if the dual-mode UE subscribes a barring of long-distance calls service, the basic service AS should reject the call.

However, in Step 205, the INVITE message received by the basic service AS carries only the home location information of the called UE, e.g. the Called Party Number, but does not carry the location information of the dual-mode UE initiating the call. Therefore, according to the process for implementing a call in the prior art, the basic service AS cannot determine whether the dual-mode UE initiating the call in the CS domain satisfies the condition for subscribing original call barring service. So the subsequent call in the IMS domain will be processed without taking the subscription of the dual-mode UE into consideration, but continue in the IMS domain regardless of whether the call is subjected to call barring, or be controlled according to other call policies of the IMS domain. This is not beneficial to the service control.

According to the processing method for implementing calls in dual networks in the prior art, when the dual-mode UE initiates a call in the CS domain, the current location information of the dual-mode UE cannot be obtained by the IMS domain. Further, the basic service AS cannot obtain the current location information of the calling UE, and cannot control reasonably the subsequent call according to subscription information of the calling UE.

Moreover, if the UE initiates an intra-domain call in the IMS domain, the SIP INVITE message carries header field of the access network information, e.g. P-Access-Network-Info header field. A Cell ID corresponding to a cell which a UE is located in is carried in the header field. The header field is transmitted with a call message to the IMS domain which the calling UE belongs to or other trustable domains. When the INVITE message is transmitted to the P-CSCF of the calling side, the P-CSCF adds the header field of the visited network ID, e.g. a P-Visited -Network-ID header field, into the INVITE message. The header fielder carries the network ID of the network which the P-CSCF is located in.

In the process of initiating a call in the IMS domain, though the P-Access-Network-Info header field carries location information of the mobile UE, the information of the header field cannot get trust from the network, because the information of the header field is added by the UE itself. So currently the location information carried in the header field is not used to control the services associated with location, e.g. original call barring services.

It can be seen from the above description that, in prior art, the basic service AS of the IMS domain is unable to determine whether a UE initiating a call satisfies the condition of the subscribed original call barring services. The subsequent call in the IMS domain may not continue according to the subscription of the UE. Therefore, it is not beneficial to the service control.

### Summary of the Invention

Accordingly, an object of an embodiment of the present invention is to provide a method for transmitting location information of UE in IMS, so that trustable location information of UE may be obtained and transmitted to entities in an IMS domain.

Another object of an embodiment of the present invention is to provide an apparatus for transmitting location information of UE in IMS, so that trustable location information of UE may be obtained and transmitted to entities in the IMS domain.

To implement the above-mentioned objects, a solution of the present invention may be provided as follows.

A method for transmitting location information of UE in IMS is provided, wherein a location information obtaining module is set in an IMS domain for obtaining location information of a UE, and the method includes the following: the location information obtaining module adds the obtained location information of the UE into a SIP signal and sends the SIP signal to the IMS domain.

An apparatus for transmitting location information of UE in IMS is provided, and the apparatus at least includes: a location information obtaining module, configured to receive location information of a UE and add the location information of the UE into a SIP signal. The SIP signal may be sent to an IMS network via a SIP signal interface module of the apparatus.

As can be seen from the above-mentioned solution, according to an embodiment of the present invention, the location information obtaining module is set in the IMS domain for obtaining the location information of the UE, and the location information obtaining module adds the obtained location information of the UE into the SIP signal to be transmitted to the IMS domain. The trustable location information of the UE may be obtained and transmitted to entities in the IMS domain.

### Brief Description of the Drawings

Fig.1 is a schematic diagram showing the structure of components for implementing call anchoring control based on IMS functional entities in the prior art;

Fig.2 is a flowchart of initiating a call by a dual-mode UE in CS domain in the prior art.

Fig.3 is a simplified flowchart of a method of the present invention;

Fig.4 is a simplified flowchart according to a first embodiment of the present invention; and

Fig.5 is a simplified flowchart according to a second embodiment of the present invention.

### Detailed Description of the Embodiments

In an embodiment of the present invention, a location information obtaining module for obtaining location information of a UE is set in an IMS domain. The location information obtaining module adds the obtained location information of the UE into a SIP signal and sends the SIP signal to the IMS domain.

To better explain the purpose, technical solution and advantages of the present invention, the following describes embodiments of the present invention in detail with reference to the accompanying drawings.

Fig. 3 is a simplified flowchart of a method of the present invention. The method includes the following step.

Step 300: A location information obtaining module for obtaining location information of an UE is set in an IMS domain.

The location information obtaining module may be set in a routing redirection functional entity, or a CS adapter functional entity, or a redirection/adapter functional entity, or functional entities related to register or calling, such as an AS/MGCF/P-CSCF. Alternatively, the location information obtaining module may be an independent device.

The location information obtaining module may obtain the location information of the UE from a Setup message is received, or location information management functional entity, e.g. Home Subscriber Server, HSS, or Gate Mobile Location Center, GMLC. The location information of the UE referred herein at least includes location information of a calling UE.

In the cases that the location information obtaining module is set in a routing redirection functional entity or a redirection/adapter functional entity, according to CAMEL protocol, an IDP message sent from a VMSC to a routing redirection functional entity located in an visited network carries a Called Party Number, a Cell ID corresponding to a cell which the calling UE is located in, and the routing redirection functional entity stores the received Cell ID and allocates an IMRN. A CS adapter functional entity located in the visited network communicates with the routing redirection functional entity, and obtains a Cell ID of a cell which a calling UE is located in corresponding to the IMRN via the IMRN allocated by the routing redirection functional entity.

In the cases that the location information obtaining module is set in a CS adapter functional entity or a redirection/adapter functional entity, after receiving an IDP message, the routing redirection functional entity sends a Called Party Number and a Cell ID corresponding to a cell which a calling UE located in carried in the received IDP message to the CS adapter functional entity. The routing redirection functional entity requests the CS adapter functional entity to allocate an IMRN. The CS adapter functional entity stores the Called Party number and the Cell ID corresponding to the cell which the calling UE is located in carried in the IDP message, allocates an IMRN corresponding to the stored Called Party number and the Cell ID corresponding to the cell which the calling UE is located in, i.e. an IMRN corresponding to the current call, and sends the allocated IMRN to the routing redirection functional entity.

In the cases that the location information obtaining module is set in a routing redirection functional entity, or a CS adapter functional entity, or a redirection/adapter functional entity, or set independently, the location information obtaining module may query directly location servers, e.g. HSS or GMLS, to obtain location information of a UE. If the HSS is queried, the inquiry may be implemented by using User Data Request message over Sh interface. If the location information of the UE exists in the HSS, the location information of the UE is directly returned. If the location information of the UE does not exist in the HSS, other location servers, e.g. VMSC or SGSN, may further be queried, for example, the VMSC or SGSN may be queried via an Any Time Interrogation, ATI, message. It should be noted that, what is mentioned herein is only one way for obtaining the location information of the UE by the location information obtaining module in the present invention. The specific process for obtaining the location information of the UE is the prior art, and thus it is not described further more herein.

In the cases that the location information obtaining module is set in a MGCF, the MGCF receives a Setup message from a UE. If the Setup message carries a Cell ID corresponding to a cell which a calling UE is located in, the Cell ID corresponding to the cell which the calling UE is located in is taken as location information of the calling UE. If the Setup message does not carry the Cell ID corresponding to the cell which the calling UE is located in, the MGCF may obtain the location information of the UE from a location server or an HSS located in the IMS domain, and the location information of the UE is taken as the location information of the calling UE.

Step 301: The location information obtaining module adds the location information of the UE it obtains into an SIP signal, and transmits the SIP signal to the IMS domain.

In the subsequent call in the IMS domain, the IMS domain may control service by using the obtained location information of the calling UE, e.g. a basic service AS of the IMS domain determines whether a UE initiating the call complies with subscribed original call barring service according to the location information of the calling UE.

In the method of the present invention, the location information of the calling UE is obtained by the preset location information obtaining module and to be sent to relevant entities of the IMS domain. So the subsequent call in IMS domain may be controlled according to the location information of the UE. Therefore, it is beneficial to the service control.

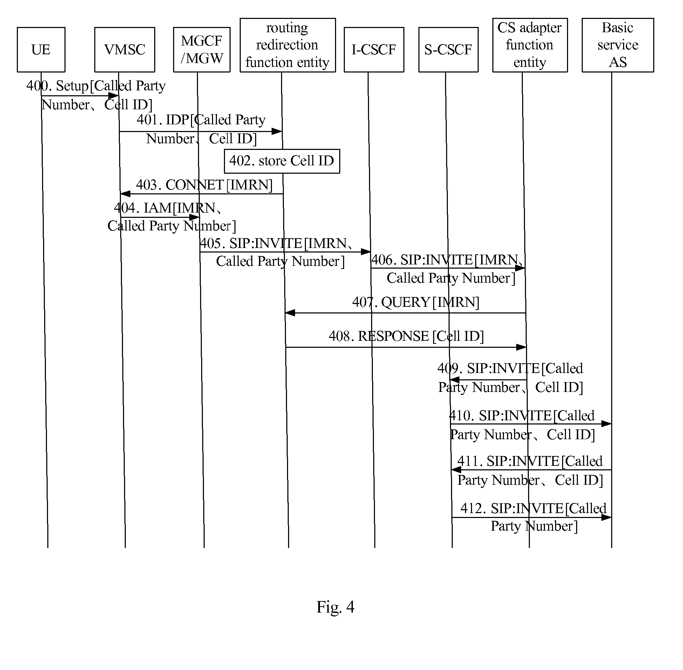

Combining a detail embodiment of the present invention, one example that a UE initiates a call from a CS domain to an IMS domain is provided to describe a method of the present invention. Fig.4 is a flowchart of a method according a first embodiment of the present invention, which includes the following steps.

Step 400: AUE sends via a CS domain a Setup message to a VMSC.

The Setup message carries a called party number, i.e. Called Party Number, and a cell ID corresponding to a cell which the UE is located in.

Step 401: After receiving the Setup message, the VMSC triggers an IDP message and sends the IDP message to a routing redirection functional entity.

According to CAMEL protocol, the IDP message should carry a Called Party Number and a Cell ID corresponding to a cell which a calling UE is located in.

In CDMA networks, the IDP message is an ORREQ (Origination Request) message. The IDP message and the QRREQ message are referred to an intelligent trigger message herein.

The above mentioned steps 400-401 are consistent with the way in prior art.

Steps 402-403: The routing redirection functional entity stores the received Cell ID, allocates an IMRN corresponding to the Cell ID, and returns a CONNECT message carrying the allocated IMRN to the VMSC. So that the call is redirected to an IMS domain.

Step 404: The VMSC adds the received IMRN and the Called Party Number into an IAM and transmits the IAM to an MGCF of the IMS domain.

In this step, the VMSC redirects the call to an entrance gate of the IMS domain according to the IMRN.

Step 405: The MGCF constructs a SIP INVITE message, adds the received IMRN and Called Party Number into the INVITE message, and transmits the INVITE message to an entrance I-CSCF of the IMS domain which a called UE belongs to.

The IMRN carried in the INVITE message is taken as a Called address.

Step 406: After receiving the INVITE message, the I-CSCF detects that the called address is the IMRN, takes the IMRN as a PSI and routes the INVITE message to a CS adapter functional entity.

Step 407-408: The CS adapter functional entity interacts with the routing redirection functional entity by means of the IMRN to obtain the Cell ID corresponding to the cell which the calling UE is located in.

Specifically, the CS adapter functional entity adds the received IMRN into a QUERY message and transmits the QUERY message to the redirection functional entity. The routing redirection functional entity adds a cell ID corresponding to the IMRN into a RESPONSE message and returns the RESPONSE message to the CS adapter functional entity.

Step 409: The CS adapter functional entity replaces the IMRN of the INVITE message with the received Called Party Number, adds the obtained Cell ID into the SIP INVITE message, and substitutes for the UE to initiate a new call in IMS domain.

The CS adapter functional entity may utilize an existing P-Access-Network-Info header field or another certain header field of the SIP INVITE message to carry the Cell ID. Moreover, in order to be differentiated from the existing IMS initiating calls, the CS adapter functional entity may utilize an existing P-Visited-Network-Info-ID h6eader field or another certain header field of the SIP INVITE message to carry a CS initiating call identifier for identifying that the call is initiated from the CS domain. So service control entities of the IMS domain may trust the above-mentioned location information.

Step 410-411: An S-CSCF entity triggers the call to an AS, e.g. a basic service AS, which the UE belongs to and transmits the received INVITE message to the basic service AS for implementing calling service control. The basic service AS returns the INVITE message to the S-CSCF entity after finishing the calling service control.

Specially, in this step, after receiving the INVITE message, the basic service AS obtains location information of the UE according to the cell ID of the cell which the calling UE is located in carried in the P-Access-Network-Info header field of the INVITE message, and obtains home location information of the called party according to the Called Party Number. So the basic service AS may implement control over the original calls barring service.

If the original calls barring service is not needed to be implemented, the basic service AS returns the call to the S-CSCF entity after finishing calling service control. If the original calls barring is needed to be implemented, the basic service AS returns a reject response.

Step 412: The S-CSCF entity routes the call to the called networks, or sends a reject message to the calling UE.

In this step, the Called Party Number is carried in the SIP INVITE message.

The cell ID corresponding to the cell which the calling UE is located in carried in the SIP INVITE message in Step 409 may be deleted. Whether the cell ID corresponding to the cell which the calling UE is located in is deleted is determined by network Operators. The purpose of deleting is to prevent networks of other Operators from obtaining the calling location information.

It can be seen from the first embodiment that, the CS adapter functional entity of the visited network communicates with routing redirection functional entity, obtains the Cell ID corresponding to the cell which the calling UE is located in corresponding to the IMRN by using the IMRN allocated by the routing redirection functional entity, substitute for the UE to add the obtained Called Party Number and Cell ID into the SIP INVITE message, and initiate an IMS call to the called party in the IMS domain. For the subsequent call in the IMS domain, the basic service AS obtains the location of the UE according to the Cell ID corresponding to the cell which the calling UE is located in carried in the INVITE message and obtains the home location of the called party according to the Called Party Number. Therefore the subsequent call in the IMS domain may be exactly controlled according to the subscription of the calling UE.

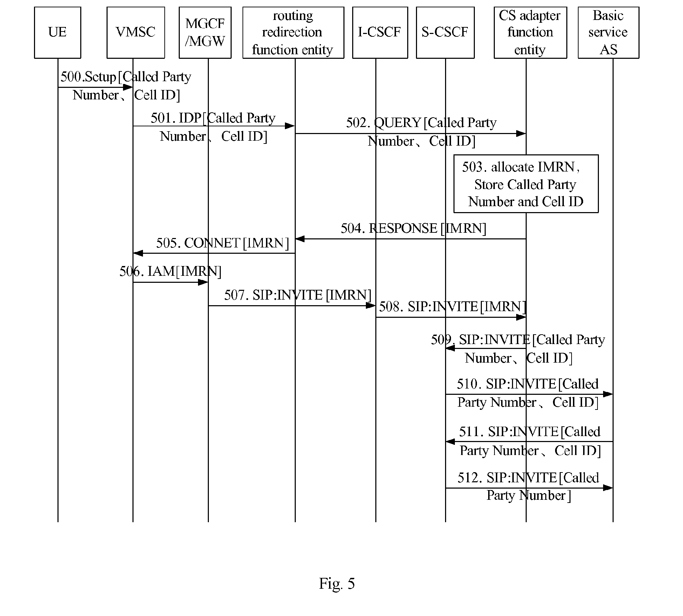

Fig.5 shows a second embodiment of the present invention. The embodiment includes the following steps.

Step 500: AUE sends a Setup message to a VMSC via a CS domain.

The Setup message carries a Called Party Number and a Cell ID corresponding to a cell which the UE is located in.

Step 501: After receiving the Setup message, the VMSC triggers an IDP message and transmits the IDP message to a routing redirection functional entity.

According to CAMEL protocol, the IDP message should carry a Called Party Number and a Cell ID corresponding to the cell which the calling UE is located in.

In CDMAnetworks, the IDP message is an Origination Request, ORREQ, message.

The process of steps 500-501 is completely consistent with the process of the prior art.

Step 502: The routing redirection functional entity requests an IMRN from a CS adapter functional entity.

The routing redirection functional entity adds the received Called Party Number and Cell ID, corresponding to the cell which the calling UE is located in into a QUERRY message, and transmits the QUERRY message to the CS adapter functional entity.

Step 503: The CS adapter functional entity allocates an IMRN, and stores the received Called Party Number and Cell ID corresponding to the cell which the calling UE is located in.

The allocated IMRN is corresponding to the stored Called Party Number and Cell ID corresponding to the cell which the calling UE is located in.

Step 504: The CS adapter functional entity adds the IMRN into a REPONSE message and returns the REPONSE message to the routing redirection functional entity.

Step 505: The routing redirection functional entity returns the received IMRN to the VMSC, and accordingly, the call is redirected to an IMS domain.

Step 506: The VMSC adds the received IMRN into an IAM message and transmits the IAM message to an MGCF of the IMS domain. The VMSC routes the call to an entrance gate of the IMS domain according to the received IMRN.

Step 507: The MGCF constructs an SIP INVITE message, adds the received IMRN into the INVITE message, and transmits the INVITE message to an entrance I-CSCF entity of the IMS domain which the called party belongs to.

Herein, the IMRN carried in the INVITE message is taken as a called address.

Step 508: After receiving the INVITE message, the I-CSCF entity detects that the called address is the IMRN, takes the IMRN as a PSI, and routes the INVITES message to the CS adapter functional entity.

Step 509: The CS adapter functional entity adds the Called Party Number and Cell ID corresponding to the cell which the calling UE is located in corresponding to the IMRN into the INVITE message by using the receives IMRN, replaces the IMRN with the Called Party Number, and substitutes for the UE to initiate a new call to an S-CSCF via the IMS domain.

Similarly, the CS adapter functional entity may utilize an existing P-Access-Network-Info header field or another certain header field of the SIP INVITE message to carry the Cell ID. Moreover, in order to distinguish from the existing IMS initiating calls, the CS adapter functional entity may utilize an existing P-Visited-Network-Info-ID header field or another certain header field of the SIP INVITE message to carry a CS initiating call identifier for identifying that the call is initiated from the CS domain.

Step 510-511: The S-CSCF entity triggers the call to a basic service AS which the UE belongs to and sends the received INVITE message to the basic service AS for implementing calling service control. The basic service AS returns the INVITE message to the S-CSCF entity after finishing the calling service control.

Specially, in this step, after receiving the INVITE message, the basic service AS obtains location information of the UE according to the Cell ID corresponding to the cell which the calling UE is located in carried in the P-Access-Network-Info header field of the INVITE message. The basic service AS also obtains home location information of the called party according to the Called Party Number. So the original call barring service may be controlled. Furthermore, a trustable identifier, for identifying whether the Cell ID corresponding to the cell which the calling UE is located in carried in the INVITE message is trustable, may be carried in the existing P-Visited-Network-Info-ID header field or another certain header field of the INVITE message.

If the original call barring is not needed to implement, the basic service AS returns the call to the S-CSCF entity after finishing calling service control. If the original call barring is needed to implement, the basic service AS returns a reject response.

Step 512: The S-CSCF entity routes the call to the called networks, or sends a reject message to the calling UE.

In this step, the Called Party Number is carried in the SIP INVITE message.

The Cell ID corresponding to the cell which the calling UE is located in carried in the SIP INVITE message may be deleted. Whether the Cell ID corresponding to the cell which the calling UE is located in is deleted is determined by network Operator. The purpose of deleting is to prevent networks of other Operators from obtaining the calling location information.

It can be seen from the second embodiment that, the CS adapter functional entity of the visited network receives a request from the routing redirection functional entity, stores the Called Party Number and Cell ID corresponding to the cell which the calling UE is located in carried in the request, and allocates the IMRN corresponding to the stored Called Party Number and Cell ID corresponding to the cell which the calling UE is located in. The CS adapter functional entity adds the obtained Called Party Number and Cell ID into the INVITE message and substitutes for the UE to initiate an IMS call to the called UE via the IMS domain. For the subsequent call in the IMS domain, the basic service AS obtains the location information of the UE according to the Cell ID corresponding to the cell which the calling UE is located in carried in the SIP INVITE message, and obtains the home location of the called party according to the Called Party Number. Therefore the subsequent call in the IMS domain may be exactly controlled according to the subscription of the calling UE.

Moreover, when the UE initiates an intra-domain call or a registration via the IMS domain, the process of the invention includes the followings. The UE may add location information of the UE itself into a P-Access-Network-Info header field when the UE initiates an SIP INVITE message or a Register Request. After receiving the SIP INVITE message or the Register Request, a location information obtaining module set in a certain entity, e.g. P-CSCF or AS, of the IMS network inquiries a Location Server to obtain true location information of the UE and adds the obtained true location information into the SIP INVITE message or the Register Request. The obtained true location information may substitute content of the P-Access-Network-Info header field. Alternatively, the true location information may also be carried by another header field or parameter. An SIP Signal is then transmitted to a next entity of the IMS domain. Therefore, all subsequent entities of the IMS domain may obtain the true location information of the UE from the SIP Signal and implement service control by using the true location information of the UE. The service may be original call barring service, Roaming Restriction service, or other service.

Apparently, those skilled in the art may make various modifications and variations to the present invention without departing from the scope of the present invention. Thus, the present invention is intended to cover those modifications and variations provided that they fall within the scope of the claims of the present invention and equivalents thereof.

## Claims

1. A method for transmitting location information of UE in IMS, **characterized in**, setting a location information obtaining module, configured to obtain location information of a UE, in an IMS domain, wherein the method comprises:
adding, by the location information obtaining module, the obtained location information of the UE into a SIP signal to transmit to the IMS domain.

2. The method according to claim 1, **characterized in that**, the location information of the UE is obtained from a received signal, a location server or a Home Subscriber Server, HSS.

3. The method according to claim 1, **characterized in that**, the method further comprises:
A. obtaining, by the location information obtaining module, the location information of the UE from a received Intelligent Trigger message; and,
B. adding the location information of the UE into the SIP signal to transmit to the IMS domain.

4. The method according to claim 3, **characterized in that**, the location information obtaining module is set in a routing redirection functional entity, and the step A further comprises:
A11. receiving, by a VMSC, a Setup message carrying the location information of the UE from the UE;
A12. transmitting, by the VMSC, the received location information of the UE to the routing redirection functional entity, wherein the routing redirection functional entity stores the location information of the UE; and
A13. allocating, by the routing redirection functional entity, an IMRN corresponding to a current call.

5. The method according to claim 4, **characterized in that**, the step B further comprises:
B11. returning, by the routing redirection functional entity, the allocated IMRN to the VMSC, wherein the VMSC routes the current call to an entrance gate of the IMS domain according to the received IMRN;
B12. constructing, by the entrance gate of the IMS domain, a SIP INVITE message by using the received IMRN and routing the SIP INVITE message to a CS adapter functional entity of the IMS domain via an entrance I-CSCF of the IMS domain;
B13. obtaining, by the CS adapter functional entity, the location information of the UE corresponding to the IMRN by interacting with the routing redirection entity by means of the received IMRN; and
B14. adding, by the CS adapter functional entity, the obtained location information of the UE into the SIP INVITE message to initiate the current call.

6. The method according claim 3, **characterized in that**, the location information obtaining module is set in a CS adapter functional entity, and the step A further comprises:
A21. receiving, by a VMSC, a Setup message carrying the location information of the UE from the UE;
A22. transmitting, by the VMSC, the received location information of the UE to a routing redirection functional entity, wherein the routing redirection functional entity transmits the received location information of the UE to the CS adapter functional entity and requests for a IMRN; and
A23. storing, by the CS adapter functional entity, the received location information of the UE, and allocating an IMRN corresponding to a current call.

7. The method according to claim 6, **characterized in that,** the step B further comprises:
B21. transmitting, by the CS adapter functional entity, the allocated IMRN to the VMSC via the routing redirection functional entity, wherein the VMSC routes the current call to an entrance gate of the IMS domain according the received IMRN;
B22. constructing, by the entrance gate of the IMS domain, a SIP INVITE message according to the received IMRN, and routing the SIP INVITE message to the CS adapter functional entity via an entrance I-CSCF of the IMS domain; and
B23. adding, by the CS adapter functional entity, stored location information of the UE corresponding to the IMRN into the SIP INVITE message to initiate a call.

8. The method according to claim 1, **characterized in that**, the location information obtaining module is set in an MGCF of the IMS domain, and the step A further comprises:
A31. taking, by the MGCF, a Cell ID corresponding to a cell which the UE is located in carried in a Setup message as the location information of the UE after receiving the Setup message from the UE; or
obtaining, by the MGCF, the location information of the UE from a location server or an HSS and taking the obtained location information of the UE as the location information of the UE.

9. The method according to claim 1, **characterized in that**, the method further comprises:
a.requesting, by the location information obtaining module, the location information of the UE relating to SIP session/registration from a location server or an HSS after receiving a SIP INVTIE message/register request from the UE; and
b. adding the obtained location information of the UE into the SIP INVITE message/register request to transmit to a next entity of the IMS domain.

10. The method according to claim 5, 7 or 9, **characterized in that**, the method further comprises:
implementing, by an AS of the IMS domain, service control according to the received location information of the UE.

11. The method according to claim 10, **characterized in that**, the service is original calls barring service, roaming restriction service or other services.

12. The method according any one of claims 1-9, **characterized in that,** the location information of the UE is a Cell ID corresponding to a cell which the UE is located in.

13. The method according to any one of claims 1-9, **characterized in that**, the location information of the UE is carried in a P-Access-Network-Info header field or other header fields of a SIP INVITE message/register request.

14. The method according to claim 13, **characterized in that,** the P-Visited-Network-Info-ID header field or other header fields of the SIP INVITE/register request message further carries a CS call identifier for identifying a current call initiated from a CS domain, or a location information trustable identifier for identifying whether a Cell ID corresponding to a cell which the UE is located in carried in the SIP message is trustable.

15. The method according claim 4 or 6, **characterized in that,** the routing redirection functional entity and a CS functional entity is set separately, or set in one entity and respectively taken as a functional module.

16. An apparatus for transmitting location information in IMS domain, **characterized in that**, the apparatus comprises: a location information obtaining module, configured to receive location information of a UE, add the location information of the UE into a SIP signal, and transmit the signal to an IMS network via an existing SIP signal interface module of the apparatus.

17. The apparatus according to claim 16, **characterized in that**, the apparatus is a routing redirection functional entity, and the location information obtaining module is set in the routing redirection functional entity; or
the apparatus is a CS adapter functional entity, and the location information obtaining module is set in the CS adapter functional entity; or
the apparatus is a Redirection/CS adapter functional entity, and the location information obtaining module is set in the Redirection/CS adapter functional entity; or
the apparatus is an entity in the IMS domain related to a call or register , and the location information obtaining module is set in the entity related to the call or register; or the apparatus is an independent entity.

18. The apparatus according to claim 17, **characterized in that**, the entity in the IMS domain related to the call or register comprises: an AS, an MGCF, or a P-CSCF.
